# EUROPEAN PATENT APPLICATION

(11) **EP 2 239 044 A1**
(43) Date of publication of application: **13.10.2010**
(21) Application number: 08842324.9
(22) Date of filing: 23.10.2008
(51) Int. Cl.: B01D 63/06, B01D 63/00, B01D 69/02, B01D 71/32, B01D 71/36, C02F 1/44, C02F 3/12

(54) **SEPARATION MEMBRANE ELEMENT FOR FILTRATION AND MEMBRANE MODULE FOR FILTRATION**

(30) Priority: 24.10.2007 JP 2007276620
(71) Applicant: Sumitomo Electric Fine Polymer, Inc., Sennan-gun, Osaka 590-0458 (JP)
(72) Inventor: MORITA, Toru, Sennan-gun Osaka 590-0458 (JP)
(74) Representative: Setna, Rohan P.
(86) International application number: PCT/JP2008/069223
(87) International publication number: WO 2009/054448

(57) **Abstract**

Provided is a separation membrane element for filtration which has excellent filtration performance and is excellent in terms of chemical resistance and mechanical strength and with which a stable permeation flow rate can be obtained over a long period of time. A separation membrane element for filtration is configured to perform solid-liquid separation treatment by being immersed in a liquid to be treated which contains a suspended component, and includes a cylindrical filtration membrane obtained by forming a porous sheet including at least an expanded porous PTFE (polytetrafluoroethylene) membrane into a cylindrical shape and in which a hollow surrounded by the porous sheet serves as a treated-liquid passage; a support member for maintaining the hollow serving as the treated-liquid passage; and sealing parts which seal both axial-direction ends of the cylindrical filtration membrane so as to leave at least one treated-liquid takeout opening open.

## Description

### Technical Field

The present invention relates to a separation membrane element for filtration and a membrane module for filtration including an assembly of a plurality of separation membrane elements, and is to be applied to filtration apparatuses which perform solid-liquid separation treatment in the environmental conservation field, the food and drug field, etc.

### Background Art

Conventionally, membrane modules including assemblies of a plurality of porous membranes for filtration have been fitted in immersion-type suction filtration apparatuses or external pressure filtration apparatuses, and widely used in the water purification treatment field, such as purification of river water and lake water. Recently, the membrane modules have been used not only in the water purification field but also for treatment of highly polluted water, such as secondary treatment and tertiary treatment of sewage, and filtration of effluent, industrial wastewater, industrial water, and the like.
As one example of use of treatment of highly polluted water, effluent treatment systems using a Membrane Bioreactor process using membrane modules have been becoming widespread. Since the Membrane Bioreactor process can be configured to operate using highly concentrated activated sludge, the capacity of the aeration tank can be decreased, and no settling tank/sludge concentration tank are required. Thus, this technique is advantageous over conventional, general activated sludge treatment apparatuses because the installation area can be decreased. In addition, in the Membrane Bioreactor process, the quality of treated water can be improved compared with conventional techniques, which is also advantageous.

However, when treatment of highly turbid effluent is continued using a filtration apparatus provided with a membrane module, suspended components contained in the liquid to be treated are deposited on the surfaces of and between membranes, and membrane clogging occurs, resulting in a decrease in permeation flow rate.
In particular, in treatment of highly polluted water, such as a Membrane Bioreactor process, the viscosity of the liquid to be treated is high, and fouling of membranes due to sticky deposits characteristic to biological treatment (bio-fouling) occurs. Therefore, compared with general filtration systems, suspended components are easily deposited on filtration membranes, and the permeation flow rate is markedly decreased because of adhesion of deposits and blocking. Thus, in a filtration apparatus including a membrane module, usually, a cleaning process (aeration treatment) is carried out during operation, in which pressurized air is supplied, effluent flow is formed by air bubbling or the like, and thereby, deposits are removed by separation or mechanical load due to oscillation of the filtration membranes. Furthermore, it is necessary to recover filtration capacity repeatedly by performing a maintenance process in which deposits that cannot be removed by aeration treatment or deposits that are blocking the membranes are decomposed and cleaned away using an aqueous solution of a strong alkali, such as sodium hydroxide; an acid, such as hydrochloric acid, citric acid, and oxalic acid; or a strong oxidizer, such as sodium hypochlorite, depending on the type of deposits. Furthermore, in the case of unexpected accidents, such as abnormal inflow of highly turbid effluent, there is a possibility that it may be necessary to perform chemical cleaning using a higher concentration chemical.
Therefore, membrane modules and filtration membrane elements constituting the membrane modules are desired to have, in addition to high filtration performance, strength to endure mechanical load during long-time operation, and high chemical resistance, in particular, to oxidizers and acids/alkalis.
In particular, when used in effluent treatment, especially, in large-scale sewage disposal plants and the like, membrane elements and membrane modules are usually required to have a product lifetime of 5 to 10 years, and thus, are strongly desired to have mechanical strength and chemical resistance that can endure a long-time operation of the filtration apparatus exceeding the product lifetime, and repeated maintenance.

Examples of the conventional membrane module include a hollow-fiber membrane module in which many hollow fibers are bundled and arranged into a circular pattern and fixed to a fixing member with ends thereof being in an open state to form a catchment portion, and a flat sheet membrane module including a plurality of flat-sheet-type membrane elements, in each of which a sheet-like porous membrane is supported by a supporting plate.

As the hollow-fiber membrane module, the applicant of the present invention has proposed, in Japanese Patent No. 3851864 (Patent Reference 1), a filtration module including a bundle of a plurality of porous multilayered hollow fibers, each porous multilayer hollow fiber including a supporting layer composed of an expanded porous PTFE tube and a filtration layer composed of an expanded porous PTFE sheet, the filtration layer being integrated into the outer surface of the tube of the supporting layer which is located on the internal surface side, in which pores of the supporting layer and pores of the filtration layer are in communication with each other three-dimensionally.
Furthermore, conventional examples of the flat sheet membrane module include a module in which a porous membrane composed of a polyolefin resin, such as chlorinated polyethylene, is used, and a module in which a porous membrane composed of a polyvinylidene fluoride (PVDF) resin is used as disclosed in Japanese Unexamined Patent Application Publication No. 2004-182919 (Patent Reference 2).

[Patent Reference 1] Japanese Patent No. 3851864
[Patent Reference 2] Japanese Unexamined Patent Application Publication No. 2004-182919

### Disclosure of Invention

### Problems to be Solved by the Invention

The hollow-fiber membrane module, such as the one disclosed in Patent Ref. 1, is generally advantageous in that the installation area per effective membrane area can be decreased to achieve excellent compactness. However, when the hollow-fiber membrane module is applied to highly polluted effluent, in particular, to the Membrane Bioreactor process, the advantage cannot be fully utilized. More specifically, when the hollow-fiber membrane module is applied to highly turbid effluent, in particular, treatment by means of a Membrane Bioreactor process in which the viscosity of the liquid to be treated is high, the flow of the liquid to be treated caused by aeration becomes relatively slow because the space between the adjacent hollow fibers is narrow. Suspended components are easily deposited on the surfaces of and between membranes, which may result in a decrease in treatment rate. In particular, in the case of application to the Membrane Bioreactor process in which the viscosity of the liquid to be treated is high, the possibility of the decrease in treatment rate further increases, and thus it becomes necessary to increase the distance between the adjacent hollow fibers. As a result, the installation area is increased, and it may not be possible to achieve a compact filtration apparatus.
Furthermore, the filtration module of Patent Ref. 1 uses a hollow-fiber membrane composed of PTFE and excels in chemical resistance and strength. However, the assembly work, in which many fine hollow fibers are arranged in parallel with an appropriate space therebetween, requires time and effort, thereby increasing the manufacturing cost of the filtration module.

In contrast, the flat sheet membrane module has a configuration in which sheet-like flat membrane elements are arrayed, and thus is advantageous in that aeration is easily performed over the entire surfaces of the membranes and the membrane surfaces can be efficiently cleaned. In the highly polluted water treatment, the installation area per effective membrane area may be the same level as that of the hollow-fiber membrane module because it is necessary to increase the distance between hollow fibers in order to secure the treatment rate in the hollow-fiber membrane module. Furthermore, in the flat sheet membrane module, the membrane area per part is larger than that of the hollow-fiber membrane module, thus facilitating the assembly, which is advantageous.

However, an existing flat membrane element uses a porous membrane composed of a polyolefin resin or PVDF as in Patent Ref. 2 and has a problem in terms of durability, such as mechanical strength and chemical resistance.
For example, with respect to mechanical strength, an existing flat membrane is insufficient in terms of strength of the filtration membrane, in particular, strength of the filtration membrane at a portion having filtration capability, and thus there is a high possibility that a leakage problem may occur due to damage to the membrane when the flat sheet membrane module is used for a long period of time under a load of aeration of a liquid to be treated which contains a variety of foreign matter. In particular, a filtration membrane composed of a PVDF resin is produced by re-solidifying a solution prepared by dissolving the PVDF resin in a solvent and thus is very thin and insufficient in terms of mechanical strength at a portion having filtration capability.
In the meantime, with respect to resistance to cleaning chemicals, for example, a filtration membrane composed of a polyolefin resin is relatively resistant to an alkali, but insufficiently resistant to an oxidizer. Thus, membrane cleaning with a strong oxidizer cannot be performed at a high frequency or over a long period of time. Furthermore, a filtration membrane composed of a PVDF resin is relatively resistant to an oxidizer, but insufficiently resistant to an alkali. The membrane is discolored to brownish red and the properties of the material are changed as soon as it is brought into contact with a strongly alkaline cleaning liquid. Therefore, it is not possible to use the membrane for a long period of time. Furthermore, resistance to an oxidizer at a high concentration is not sufficient.

As described above, the conventional flat sheet membrane modules for filtration do not have sufficient chemical resistance, in particular, to an oxidizer or an alkali, and cleaning is restricted. Therefore, it is not possible to perform sufficient cleaning of filtration membranes for a long period of time. In addition, because of insufficient mechanical strength, the filtration membranes may be damaged by pieces of foreign matter and the flow of the liquid to be treated, which necessitates operation at a low flow rate and shortening of the period of use, i.e., membrane replacement after a short period of time.

The present invention has been achieved in view of the problems described above. It is an object of the present invention to provide a separation membrane element for filtration which has excellent filtration performance and is excellent in terms of chemical resistance and mechanical strength and with which a stable permeation flow rate can be obtained over a long period of time, and a membrane module for filtration including the separation membrane element for filtration.

### Means for Solving the Problems

In order to solve the problems, the present invention provides a separation membrane element for filtration configured to perform solid-liquid separation treatment by being immersed in a liquid to be treated which contains a suspended component, the separation membrane element including a cylindrical filtration membrane obtained by forming a porous sheet including at least an expanded porous PTFE (polytetrafluoroethylene) membrane into a cylindrical shape and in which a hollow surrounded by the porous sheet serves as a treated-liquid passage; a support member for maintaining the hollow serving as the treated-liquid passage; and sealing parts which seal both axial-direction ends of the cylindrical filtration membrane so as to leave at least one treated-liquid takeout opening open.

The present invention is **characterized in that,** in a separation membrane element for filtration configured to perform solid-liquid separation treatment by being immersed in a liquid to be treated which contains a highly suspended component, in particular, an effluent containing activated sludge, a porous sheet is formed into a cylindrical shape, and the cylindrical filtration membrane includes at least an expanded porous PTFE (polytetrafluoroethylene) membrane. Since the porous sheet which constitutes the filtration membrane includes an expanded porous PTFE membrane, the separation membrane element excels in durability, and suspended solids adhering to the membrane surface can be substantially completely decomposed and cleaned using a high-concentration oxidizer or alkali that cannot conventionally be used. Furthermore, since a strong mechanical load can be applied in aeration treatment, filtration capability can be recovered nearly to an initial level. As a result, the life of the membrane element can be significantly extended, and a stable amount of permeated water can be obtained over a long period of time. Therefore, high usability can be exhibited in highly turbid effluent treatment.

More specifically, since the expanded porous PTFE membrane is produced through not only extrusion but also rolling and high-degree stretching steps, it is possible to form a fibrous skeleton which has a small thickness and high strength due to a high degree of molecular orientation, in which a high degree of porousness can be exhibited, and which does not easily cause blocking in spite of high porosity. Therefore, it is possible to provide a membrane material which has low flow resistance and high filtration performance. Consequently, the filtration membrane has many fine pores, a large amount of permeated water, and high performance, and also has excellent durability, in which even if a strong mechanical load is applied in aeration treatment, cracking or breakage does not occur in the filtration membrane.
In addition, the expanded porous PTFE membrane has chemical stability such that it is not affected by most chemicals. In general, porous membranes with a large specific surface area are easily corroded with a chemical and have low strength compared with bulk materials. However, the expanded porous PTFE membrane is inactive to almost all organic/inorganic chemicals, such as organic/inorganic acids, alkalis, oxidizers, reducing agents, and organic solvents, and is excellent in terms of chemical resistance. Therefore, unlike conventional flat membrane elements, the cleaning chemical is not limited, and cleaning of the filtration membrane can be performed over a long period of time by selecting any of various chemicals according to the type of deposits, and when necessary, at a high concentration. For example, a high-concentration solution of strong oxidizer, such as an aqueous solution of sodium hypochlorite or aqueous hydrogen peroxide, can be used in order to completely dissolve and remove bio-fouling and perform sterilization, and an aqueous solution of strong alkali, such as sodium hydroxide, can be used for removing oil and the like from effluent.
Constituent materials of the separation membrane element include, beside the membrane, a frame, a support member, and the like. However, these supporting members are bulk materials and have a small portion of contact with the liquid to be treated and the cleaning chemical during use, and thus corrosion of an internal non-contact portion very slowly proceeds, causing no practical problems in many cases. That is, the chemical resistance of the membrane having a large specific surface area affects whether or not the whole element can be used.

Furthermore, in the separation membrane element for filtration of the present invention, the support member for maintaining the treated-liquid passage of the cylindrical filtration membrane can be composed of a fiber assembly, such as a nonwoven fabric, or a coarse structure, such as a net. Therefore, the flow resistance inside the support member can be decreased, and treatment capacity can be improved. For example, when compared with the porous composite hollow-fiber membrane of Patent Ref. 1, even if the expanded porous PTFE tube serving as the supporting layer is designed to have a large pore diameter, flow resistance due to being porous exists, and there is a limit in reducing the flow resistance. In particular, as the flow rate of the sheet membrane of the outer peripheral filtration layer increases, reduction in the flow rate of the supporting layer becomes a larger problem.
Furthermore, in the separation membrane element for filtration of the present invention, since the treated-liquid passage (inside diameter) is larger than that of the hollow-fiber membrane, resistance to the movement of the treated liquid toward the takeout opening is small. Even if the effective length of the cylindrical filtration membrane is increased, pressure loss is small, and reduction in the flow rate can be prevented. That is, the separation membrane element for filtration is advantageous for an increase in the size of membrane modules. In particular, in the Membrane Bioreactor process, it is considered to be promising to increase the size by increasing the depth of the immersion tank in view of saving space. In such a case, the separation membrane element for filtration is particularly preferable. In addition, adhesion of foreign substances between membranes, which easily occurs in the hollow-fiber membrane module, does not easily occur, membrane surface cleaning can be easily performed during operation, and deposits can be removed efficiently. Therefore, continuous operation is possible.
Furthermore, since the separation membrane element for filtration can be manufactured using a low-cost porous sheet, the pore diameter can be freely changed depending on the usage and the installation site, any cross-sectional shape and size can be selected, and the number of assembly parts and the number of assembly processes can be reduced, thus facilitating assembly, all of which are superior to the hollow-fiber membrane element.

Preferably, the cylindrical filtration membrane has a circular cylindrical shape in which the cross-sectional shape is circular, elliptical, or oval. In addition, the cylindrical filtration membrane may have a prismatic shape in which the cross-sectional shape is polygonal, such as triangular, quadrangular, pentagonal, hexagonal, or octagonal.
Above all, preferably, the cylindrical filtration membrane has a circular cylindrical shape with a diameter of 3 to 50 mm.
The reason for setting the diameter of the cylindrical filtration membrane in the range described above is that, if the diameter is less than 3 mm, it becomes difficult to form a circular cylindrical filtration membrane by bonding both edges of the porous sheet, and also the surface area occupied by the sealing portion increases, thus decreasing the effective filtration membrane area, which is not desirable. On the other hand, if the diameter exceeds 50 mm, the filtration membrane area of the cylindrical filtration membrane relative to the installation area decreases, which is not desirable. The diameter of the cylindrical filtration membrane is more preferably 15 to 50 mm, and still more preferably 20 to 40 mm.
Meanwhile, the effective length (the length of a portion functioning as a filtration membrane) of the cylindrical filtration membrane can be set arbitrarily, but is preferably 0.5 to 4.0 m. In particular, a large length of 2 m or more is useful. According to the separation membrane element for filtration of the present invention, it is possible to manufacture an unprecedented membrane module having an effective length of 3 m or more.

The expanded porous PTFE membrane constituting the porous sheet may be obtained by uniaxial stretching or biaxial stretching, but is preferably obtained by biaxially stretching a shaped body formed by extrusion of a paste containing PTFE unsintered powder and a liquid lubricant at a stretch magnification of 1.5 to 10 times in the longitudinal direction and at a stretch magnification of 2 to 40 times in the lateral direction, and then sintering the resultant porous membrane. The biaxial stretching can enhance the strength of the fibrous skeleton surrounding pores.
The expanded porous PTFE membrane obtained by this manufacturing method can have a high porosity while having fine pores and have high particle collection efficiency and high permeation capacity.
Furthermore, the shape, size, etc., of pores of the expanded porous PTFE membrane can be easily controlled by changing the stretching conditions and sintering conditions, such as the number of steps, the temperature, and the magnification, and the like according to the liquid to be treated and required performance of filtration of the separation membrane element for filtration. Furthermore, since it is possible to easily form a laminate including porous membranes having different pore diameters, a porous filtration membrane having high particle collection efficiency, high porosity, and high performance can be efficiently manufactured.

Preferably, the expanded porous PTFE membrane has a mean pore diameter of 0.01 to 5.0 µm. In this range, a further optimum range is present for each liquid quality.
The mean pore diameter is measured with a Perm-Porometer manufactured by PMI (model number CFP-1200A).

Furthermore, the mean maximum length of the fibrous skeleton surrounding pores in the outermost layer of the expanded porous PTFE membrane is preferably 30 µm or less. In particular, when an effluent containing activated sludge or an effluent containing fine particles is used as the liquid to be treated, the mean maximum length of the fibrous skeleton surrounding pores is more preferably 5 µm or less.
The mean maximum length of the fibrous skeleton surrounding pores in the outermost layer of a membrane surface is determined by measuring, on an SEM image, the maximum distance between two points on the periphery of a pore formed by the resin portion and fibers connected thereto.

According to another index, preferably, the expanded porous PTFE membrane has a particle collection efficiency of 90% or more for particles with a particle diameter of 5 µm. In particular, when an effluent containing activated sludge or an effluent containing fine particles is used as the liquid to be treated, the particle collection efficiency is preferably 90% or more for particles with a particle diameter of 0.45 µm.
The particle collection efficiency is measured by the following method:
The expanded porous PTFE membrane is punched to a circle with a diameter of 47 mm and set into a holder. An aqueous solution containing polystyrene latex homogeneous particles (product name: DYNOSPERES SS-052-P, STADEX SC-046-S) (manufactured by JSR Corporation) having a particle diameter of 5.125 µm or 0.458 µm is prepared and filtered using the expanded porous PTFE membrane which has been set, at a pressure of 41.2 kPa. The absorbance is measured for the aqueous solution before filtration and the filtrate, and the ratio between the two is calculated. The absorbance is measured using an ultraviolet-visible spectrophotometer (manufactured by Shimadzu Corporation, UV-160) at a wavelength of 310 nm (measurement accuracy 1/100).

The average thickness of the expanded porous PTFE membrane is preferably 5 to 200 µm, and the porosity of the expanded porous PTFE membrane is preferably 40% to 90%.
The average thickness is measured with a dial gauge, and the porosity is measured by the method described in ASTM D792.

Preferably, the expanded porous PTFE membrane has a tensile strength (according to JIS K 7113) of 10 N/mM² or more.
Furthermore, preferably, the expanded porous PTFE membrane has excellent chemical resistance such that, even after being immersed in each of 3% by mass sulfuric acid, a 4% by mass aqueous solution of sodium hydroxide, and an aqueous solution of sodium hypochlorite having an effective chlorine concentration of 10%, at a temperature of 50°C for 10 days, the amount of permeated water is not decreased, and the membrane is not damaged.

In the cylindrical filtration membrane of the present invention, the porous sheet which forms fine pores is at least partially composed of an expanded porous PTFE membrane. The porous sheet may be composed of a single expanded porous PTFE membrane, may be composed of a laminate including porous PTFE membranes having different specifications, such as pore diameters, or may be composed of a laminate including a porous PTFE membrane and a porous membrane composed of another material or a porous material sheet.
Furthermore, the porous sheet may include a dense layer provided on a single expanded porous PTFE membrane or on the outer surface of a laminate. When a dense layer is provided, a cylindrical filtration membrane can have a structure including at least two layers, i.e., an expanded porous PTFE layer composed of an expanded porous PTFE membrane and a dense layer, and the expanded porous PTFE layer can be used as a shape-maintaining layer serving as a supporting layer for the porous sheet.

The dense layer may be formed by a method in which fine particles of PTFE and PFA (tetrafluoroethylene perfluoroalkoxyvinylether copolymer), FEP (tetrafluoroethylene hexafluoropropylene copolymer), or the like having chemical resistance and heat resistance which are equivalent to those of PTFE, or a solution in which the fine particles are dispersed onto the outer surface of the single expanded porous PTFE membrane or the outer surface of the laminate, followed by sintering.

In another method, (1) a fluorocarbon resin film mainly composed of PTFE is formed into a circular cylindrical shape, the shaped body is sintered, and the resulting circular cylindrical block is cut (rotary peeled) to form a fluorocarbon resin film. Alternatively, (2) a dispersion prepared by dispersing fluorocarbon resin powder particles in a liquid is applied by coating on a heat-resistant substrate, the powder particles are bound together by heating to a melting point or higher, and then the heat-resistant substrate is removed to form a fluorocarbon resin film.
Then, the film (1) or (2) may be further stretched to form a dense layer, and the dense layer may be laminated on an expanded porous PTFE membrane substrate to thereby obtain a two-layered membrane.

The expression "mainly composed of PTFE" means that the PTFE mass ratio is 80% or more, and preferably 90% or more.
Examples of a thermoplastic fluorocarbon resin to be combined include PFA, FEP, ETFE, PCTFE, PVDF, PVF, and the like. Among these resins, FEP having a relatively low decomposition rate even at the PTFE melting point peak or higher (327°C or higher) is preferable, and PFA is more preferable.

The molecular weight of the PTFE is preferably about 1,000,000 to about 3,500,000, and the heat of fusion, which is an index of molecular weight, in the third step of a method, which will be described below, is preferably 32 J/g or more and less than 47.8 J/g, and more preferably 32 to 44 J/g. When PTFE having the molecular weight and heat of fusion described above is used, a porous material with a high porosity of 30% to 80% and a fine pore size, i.e., a mean flow pore size of 0.01 to 0.05 µm can be produced.

The heat of fusion in the third step is measured using a heat-flux type differential scanning calorimeter (manufactured by Shimadzu Corporation, Heat-Flux Type Differential Scanning Calorimeter, DSC-50) as follows:
First, 10 to 20 mg of a sample is collected, and, as necessary, PTFE is sealed in an aluminum cell (it is important to keep PTFE in a free state so that it can shrink and deform as much as possible without breaking the cell or completely breaking the cell). The sample is heated from room temperature to 245°C at 50°C/min, and then heated to 365°C at a rate of 10°C/min (first step).
Next, the sample is cooled to 350°C at a rate of -10°C/min and maintained at 350°C for 5 minutes. Next, the sample is cooled from 350°C to 330°C at a rate of -10°C /min and from 330°C to 305°C at a rate of -1°C/min (second step). The quantity of heat generated increases as the molecular weight decreases.
Next, the sample is cooled from 305°C to 245°C at a rate of -50°C/min. Then, the sample is heated from 245°C to 365°C at a rate of 10°C/min (third step).
The sampling time is 0.5 sec for each.
The quantity of heat absorbed in the first step, the quantity of heat generated in the second step, and the quantity of heat absorbed (heat of fusion) in the third step are determined by integration between 303°C and 353°C, between 318°C and 309°C, and between 296°C and 343°C, respectively.

The dense layer is preferably as thin as possible for increasing the flow rate (enhancing the performance). The method (1) is preferable because a thin film of about 20 to 50 µm can be produced, and the method (2) is more preferable because a thinner dense layer of 2 to 20 µm can be produced.

Such a fluorocarbon resin film becomes difficult to handle and stretching becomes impossible as the thickness decreases. A thin expanded porous film composed of a fluorocarbon resin can be obtained by bonding a thin film to a substrate and then stretching the thin film together with the substrate. When a substrate composed of pre-expanded porous PTFE is used as the substrate, a composite material of the substrate and the porous film can be directly used. In such a case, the porous substrate preferably has a porosity of 40% or more and 30 or less Gurley number, and in order to increase the flow rate (enhance the performance), the porous substrate preferably has a porosity of 60% or more and 15 or less Gurley number. Gurley number denotes an index of air permeability and are measured by Oken-type Gurley number measuring instrument according to JIS 8117.

The dense layer has a finer pore diameter than that of the expanded porous PTFE membrane and is capable of removing finer particles than those removed by the single expanded porous PTFE membrane, preventing blocking from easily occurring, and exhibiting excellent filtration performance. When the dense layer is provided, the dense layer can be produced so as to have a small thickness, and thus the thickness is preferably 10 µm or less, particularly 5 µm or less, when the pore diameter is 0.4 µm or less, particularly 0.1 µm or less.
When the dense layer is provided, as described above, by disposing the dense layer on the liquid to be treated side (outer surface side), solid particles separated can be prevented from being irreversibly captured in the pores of the dense layer in a stationary state after the initial stage of solid-liquid separation treatment. Furthermore, when a swirl flow is generated by a difference in density caused by bubbles of aeration treatment in a tank containing the liquid to be treated, deposits can be easily removed by the flow.

When a laminate including porous PTFE membranes having different pore diameters is formed, the porous sheet is preferably composed of at least two layers, i.e., a laminate including a dense expanded porous PTFE membrane having a small pore diameter and a porous PTFE membrane having a larger pore diameter than that of the expanded porous PTFE membrane.
In such a case, preferably, the expanded porous PTFE membrane having a larger pore diameter is laminated on the inner surface side of the expanded porous PTFE membrane having a smaller pore diameter so as to be used as a support of the expanded porous PTFE membrane having a smaller pore diameter.
When the expanded porous PTFE membrane having a smaller pore diameter is in contact with or bonded to the support member, the treated liquid passing through the expanded porous PTFE membrane in a non-opening portion of the support member does not substantially pass, thereby decreasing the flow rate. On the other hand, when the porous PTFE membrane having a larger pore diameter is laminated on the inner surface side, the entire surface of the expanded porous PTFE membrane having a smaller pore diameter with high permeation resistance can be used as a permeation membrane, and treatment can be performed without decreasing the flow rate.
When two expanded porous PTFE membranes having different pore diameters are laminated, a laminate can be easily formed by laminating two types of expanded porous PTFE membranes, preferably expanded PTFE membranes in an incompletely sintered state, and integrating the membranes by sintering.

When the liquid to be treated is an aqueous system, as necessary, a hydrophilic polymer having excellent chemical resistance is preferably fixed on the outer surface of the expanded porous PTFE membrane to enhance the hydrophilicity of the surface.
As a method for enhancing the hydrophilicity of the surface of the expanded porous PTFE membrane, for example, a water-insolubilizing method may be used in which polyvinyl alcohol having relatively excellent chemical resistance is crosslinked with dialdehyde in an aqueous solution using an acid catalyst or crosslinked by UV treatment or the like using an appropriate crosslinking agent. These methods can impart chemically relatively stable hydrophilicty.
In addition, a method may be employed in which an ethylene-vinyl alcohol copolymer or the like is dissolved in IPA (isopropyl alcohol) or the like and then insolubilized on the porous PTFE membrane.

Preferably, the porous sheet constituting the cylindrical filtration membrane is formed into a cylindrical shape by rolling a sheet and bonding both edges of the sheet, or bonding edges of a plurality of sheets to each other. When the cylindrical filtration membrane is formed using a porous sheet, the cylindrical filtration membrane can be formed only by bonding a roll start side and a roll finish side, which facilitates assembly and is advantageous in terms of cost.
Since the expanded porous PTFE membrane has sufficient bending strength and flexibility, even if the membrane is bent, filtration performance or strength is not impaired.
Bonding of the roll start side and the roll finish side of the sheet and joining of a plurality of sheets are preferably performed by sealing using heating under pressure, a laser, or the like.
Furthermore, the cylindrical filtration membrane may be composed of a bag in which one axial-direction end is closed by bonding so that the inside of the bag is used as a hollow serving as a treated-liquid passage.

In the separation membrane element for filtration of the present invention, as described above, a space (hollow) for a treated-liquid passage is secured by the support member.
The shape, structure, etc. of the support member are not particularly limited as long as the hollow for the treated-liquid passage can be secured. Preferably, the support member is in the shape of at least one mesh, a fiber assembly, a perforated sheet, or a pleated member having continuing v-shaped bent portions.
The term "fiber assembly" refers to a structure in which fibrous materials are oriented directionally or randomly, and includes a nonwoven fabric, a woven fabric, and the like.
When the support member is disposed on the inner side of the cylindrical filtration membrane, a configuration can be obtained in which the permeated treated liquid is in communication with the treated-liquid takeout opening while the cylindrical filtration membrane is stably supported.
In order to securely form the passage, a plurality of supporting members may be interposed at a predetermined interval between the inner surfaces facing the space of the cylindrical filtration membrane.
Furthermore, the support member is preferably fixed to at least a portion of the cylindrical filtration membrane. However, in the case where no or little load pressure is applied from the treated liquid side, such as in backwashing treatment, the support member may not be fixed.

The support member is preferably composed of a polyolefin resin, a polyester resin, a fluorocarbon resin, or a metal material coated with a polyolefin resin or a fluorocarbon resin, which has excellent chemical resistance and is capable of thermal bonding. As the polyolefin resin, polyethylene or polypropylene is preferable, and as the fluorocarbon resin, PFA or FEP is preferable. Furthermore, when used under mild conditions, various engineering plastics, such as a polyester resin, an ABS resin, a PBT resin, a PPS resin, and PEEK, may be used.
In particular, in the case where the separation membrane element for filtration of the present invention is used for effluent treatment and the support member is composed of a fiber assembly, such as a nonwoven fabric, or a mesh (net), a polyolefin resin having a low melting point, good workability, and low hydrolyzability is preferably used. Furthermore, when a highly oxidizing substance, such as high-concentration ozone, is used for cleaning, a fluorocarbon resin is preferably used.

When a support member composed of a fiber assembly or net (mesh) composed of a polyolefin resin or heat-fusible fluorocarbon resin or another porous sheet is laminated and integrated with the expanded PTFE membrane, for example, lamination can be easily performed by heating under pressure using a thermal bonding apparatus according to the size of the support member. In such a case, pressure and heat are applied from the expanded porous PTFE membrane side, which has a higher melting point, so that the surface of the net, the fiber assembly, or the like is partially melted by heat transferred through the expanded porous PTFE membrane, partially enters fine pores of the porous PTFE membrane, and then is cooled, thus realizing reliable sealing. The membrane element can be manufactured by such a simple method at reduced cost.
Furthermore, the fiber assembly, the net, or the other porous sheet may be spot-glued or provided separately without being entirely bonded to the cylindrical filtration membrane.
When the other porous sheet is used, a material having low flow resistance and larger pores is preferably selected because of the need for the function as a support.

The support member composed of the fiber assembly, the net, or the other porous sheet is located on the inner surface side facing the space of the expanded porous PTFE membrane. As described above, the support member may be directly laminated on the expanded porous PTFE membrane, or may be formed into a laminate through another porous membrane located on the inner surface side of the expanded porous PTFE membrane.
When such a laminate is used, the fiber assembly, the net, or the other porous sheet does not obstruct the treated-liquid passage, and the planar shape of the cylindrical filtration membrane provided with the expanded porous PTFE membrane can be stably maintained.

The shape of the hollow constituted by the cylindrical filtration membrane and the support member is not limited as long as the treated liquid can pass through the hollow.
By using a cylindrical support member provided with pores in communication with the treated liquid, such as a fiber assembly or a net, a hollow may be provided inside the cylindrical support member. Alternatively, a configuration may be used in which the support member is formed using a worked member provided with a plurality of outlets in communication with the treated-liquid takeout opening, the outlets are arranged at least on the treated-liquid takeout opening side end of the cylindrical filtration membrane, and the outer peripheral surface of the worked member is fixed to the inner peripheral surface of the cylindrical filtration membrane. For example, a configuration may be used in which, using a support member composed of a pleated worked member having continuing v-shaped bent portions, a hollow is provided in a space between the support member and the cylindrical filtration membrane.

The support member may maintain the shape of the cylindrical filtration membrane together with frames, which will be described below. Alternatively, in view of ease of work, a configuration may be used in which the support member is formed so as to have cylindrical or prismatic shape maintaining capability, and the support member is covered with the cylindrical filtration membrane.

The separation membrane element for filtration of the present invention includes sealing parts which seal both axial-direction ends of the cylindrical filtration membrane so as to leave at least one treated-liquid takeout opening open. That is, the outer peripheral edges of the cylindrical filtration membrane, other than the treated-liquid takeout opening, are sealed. In addition to the configuration in which one axial-direction end of the cylindrical filtration membrane is sealed, and the other axial-direction end is sealed so as to leave the treated-liquid takeout opening open, a configuration may be used in which both axial-direction ends are sealed so as to leave the treated-liquid takeout opening open at each end.

As the method for forming the sealing parts, for example, configurations (1) to (3) described below may be used.
(1) The sealing parts are constituted by a pair of frames disposed at both axial-direction ends of the cylindrical filtration membrane, and the frames are fixed to both ends of the cylindrical filtration membrane.
(2) The sealing parts are formed by closing both axial-direction ends of the cylindrical filtration membrane by sealing using heating under pressure or a laser, and the treated-liquid takeout opening is formed without being closed by sealing.
(3) In the above-described (2), the treated-liquid takeout opening side of the cylindrical filtration membrane is closed by fixing to a frame provided with a treated-liquid takeout opening.

In the configuration (1), the cylindrical filtration membrane can be held by both the support member and the frames, and thus a stable configuration can be obtained.
The frames that fix the both ends of the cylindrical filtration membrane are preferably disc-shaped, and a pair of disc-shaped frames may be connected to each other by an interconnecting frame having a length corresponding to the length in the axial direction of the cylindrical filtration membrane.
By providing the interconnecting frame, a pair of frames can be held stably, and the cylindrical filtration membrane can be more stably held.

In each of the configurations (2) and (3), while maintaining the treated-liquid passage with the support member, the sealing parts can be formed only by sealing one end or both ends of the cylindrical filtration membrane. Thus, the separation membrane element for filtration can be easily fabricated, and the number of parts can be decreased. In particular, in the case where the sealing portion of the cylindrical filtration membrane is desired to be protected, a frame may be provided so as to cover the sealing portion.

The frames are preferably disc-shaped, and the axial-direction ends of the cylindrical filtration membrane are preferably fixed by heat sealing or bonding to the circumferential surfaces of the frames. Furthermore, grooves may be formed in the disc-shaped frames, and openings of the cylindrical filtration membrane may be buried in the grooves.
By providing the frames in such a manner, the treated-liquid passage can be maintained by both the support member and the frames, and one end-opening or both end-openings in the axial direction of the cylindrical filtration membrane can be protected with the frames. Therefore, a stabler separation membrane element for filtration can be obtained.

The frames are preferably composed of a resin material, such as a polyolefin resin, e.g., polyethylene, polypropylene, or the like, a polyester resin, or a fluorocarbon resin.
Alternatively, a metal material, such as stainless steel, which is treated with a primer or the like in advance may be coated with a dispersion of fine particles of the polyolefin resin, the polyester resin, or the fluorocarbon resin, and then baked. As in the support member, such frames can be heat-sealed with the PTFE membrane material and the like, and adhesion and bonding property with respect to the porous sheet can be enhanced.

Even when the frames are composed of the polyolefin resin as in the support member, the specific surface area in contact with the liquid is not large unlike the cylindrical filtration membrane. Therefore, the frames are less degraded due to various chemicals used during chemical cleaning, and do not decrease the strength of the separation membrane element for filtration. However, in view of chemical resistance, the support member and sealing parts, such as frames, are preferably composed of a fluorocarbon resin, such as PTFE, PFA, FEP, or PVDF, and in particular, FEP or PFA which is easily thermally bonded and has excellent chemical resistance. Furthermore, when used under mild conditions, various engineering plastics, such as a polyolefin resin, a polyester resin, an ABS resin, a PBT resin, a PPS resin, and PEEK, may be used.
Furthermore, as described above, in view of excellent workability, the frames may be composed of a metal material coated with the resin material.

As the method for fixing the end openings of the cylindrical filtration membrane to the frames and sealing the ends of the cylindrical filtration membrane, either heat or an adhesive may be used. However, heat-sealing is preferably used because it is possible to prevent dissolution of the adhesive component during operation or cleaning of the filtration apparatus, in particular, in the case where chemical cleaning treatment is performed.
Heat-sealing is preferably performed by heating under pressure or a laser.

In the separation membrane element for filtration including the porous sheet composed of PTFE as a base which excels in chemical resistance according to the present invention, when the other parts, such as the support member and the frames, are also composed of a fluorocarbon resin having excellent chemical resistance so that the entire element is composed of a fluorocarbon resin, and assembling is performed by heat-sealing or the like, O rings or the like are not required. Thus, the element can be applied to almost all chemicals according to the load of the liquid to be treated and the cleaning chemical.
Furthermore, in heat-sealing the porous sheets, the cylindrical filtration membrane and the frames, the cylindrical filtration membrane and the support member, or the like, in order to improve workability and reliability, a binder can be used between both parts, for example, by applying a film having a melting point equal to or lower than that of the membrane or the member or a dispersion containing particles.
Meanwhile, the heat-sealing operation can be performed by applying appropriate pressure and heat in order to suppress a change in the porous structure of the porous membrane. Preferably, the pressure is released after heating for a predetermined time through a cooling step. The reason for this is that, if cooling is not performed, there is a possibility that the membrane may partially adhere to a member, such as a heater, and may be extended. These techniques make it possible to produce a finished filter component which is reliable and which has a low amount of eluted substance using a PTFE membrane having low melt viscosity and low adhesiveness.

Furthermore, the present invention provides a membrane module for filtration used for external pressure filtration or immersion-type pressure suction filtration, the membrane module including a plurality of separation membrane elements for filtration described above, in which the separation membrane elements for filtration are connected to each other with a space therebetween.

The membrane module for filtration, for example, may have a configuration in which the separation membrane elements for filtration are arranged in parallel, a common treated-liquid collecting tube is disposed above the separation membrane elements, and the treated-liquid takeout opening provided on the upper surface of each of the separation membrane elements for filtration arranged in parallel is connected to an end of its corresponding branch tube branched from the common treated-liquid collecting tube so that the separation membrane elements for filtration are suspended and supported.
In such a configuration, many separation membrane elements for filtration can be installed, and a large effective membrane area can be secured. Therefore, a large treatment capacity can be obtained.
Furthermore, it is easy to configure a filtration apparatus in which aeration devices are disposed between the separation membrane elements, and surfaces of the membranes can be cleaned uniformly.

In addition, it is not always necessary to arrange the separation membrane elements for filtration in parallel, and any configuration in which a plurality of elements are arranged with a space therebetween may be used. Depending on the usage, the elements may be arranged radially, spirally, in a shape in which the elements constitute the sides of a polygon, concentrically, or the like.

Furthermore, the membrane module for filtration may be configured such that cylindrical filtration membranes, each being provided with a support member inside, are fixed, with one end-opening or both end-openings being in an open state, to a fixing member to form a treated-liquid takeout opening. In this case, preferably, the fixing member serves as sealing parts for a plurality of separation membrane elements for filtration, and the end openings are in communication with an inside of a collecting header and with a collecting tube serving as the treated-liquid takeout opening. In this case, the fixing member is preferably composed of a polyolefin resin or a fluorocarbon resin, but another resin, for example, an epoxy resin, a urethane resin, or an ABS resin, may be used depending on conditions for use (in particular, cleaning conditions).
In such a configuration, one treated-liquid takeout opening is provided for a plurality of separation membrane elements for filtration, and it is not necessary to provide a treated-liquid takeout opening for each separation membrane element for filtration, thereby simplifying and facilitating the manufacture of the membrane module for filtration.

The membrane module for filtration of the present invention is excellent in terms of chemical resistance and mechanical strength, and thus can be suitably used for a liquid to be treated which contains effluent containing activated sludge.
In particular, the membrane module for filtration is excellent in that it can be stably used for activated sludge (liquid to be treated) containing 5,000 to 30,000 mg/L of MLSS (mixed liquor suspended solids).

### Advantages

As described above, the separation membrane element for filtration of the present invention uses a cylindrical filtration membrane composed of a porous sheet including an expanded porous PTFE membrane capable of forming a fibrous skeleton which has high strength due to a high degree of molecular orientation and which does not easily cause blocking, and thus has low flow resistance, high filtration performance, and excellent chemical resistance and mechanical strength. Therefore, when there is a need to use the separation membrane element for filtration of highly polluted effluent with high turbidity, in particular, effluent containing activated sludge, in particular, activated sludge having 5,000 to 30,000 mg/L of MLSS, for a long period of time or when effluent of enclosed seawater, municipal sewage, or the like contains oil, bio-fouling, inorganic substances such as iron, oil, or the like can be cleaned with a high-concentration oxidizer or a highly alkaline chemical, which cannot conventionally be used. It is also possible to apply a mechanical load in an aeration operation. As a result, the element can be repeatedly used by recovering the filtration capability, and a stable permeation flow rate can be obtained over a long period of time.

Furthermore, since the support member for maintaining the hollow can be composed of a fiber assembly, such as a nonwoven fabric, or a coarse structure, such as a net, the flow resistance inside the support member can be decreased, and treatment capacity can be improved. Furthermore, since the treated-liquid passage is larger than that of the hollow-fiber membrane, resistance to the movement of the treated liquid toward the takeout opening is small. Even if the effective length of the cylindrical filtration membrane is increased, pressure loss is small, and reduction in the flow rate can be prevented.
Furthermore, since the cylindrical filtration membrane can be manufactured using a porous sheet, the pore diameter can be freely changed depending on the usage and the installation site, and any cross-sectional shape and size can be selected.

### Brief Description of Drawings

[Fig. 1] Figure 1 shows a separation membrane element for filtration according to a first embodiment; and Fig. 1(A) is a schematic perspective view of the separation membrane element for filtration, and Fig. 1(B) is a cross-sectional view taken along the line A-A of Fig. 1(A).
[Fig. 2] Figure 2 is a schematic view illustrating a structure of the separation membrane element for filtration according to the first embodiment.
[Fig. 3] Figure 3 is an enlarged schematic view illustrating a structure of a porous sheet constituting the cylindrical filtration membrane of the first embodiment.
[Fig. 4] Figure 4 is an enlarged schematic view illustrating a structure of a porous sheet according to a first modification example of the first embodiment.
[Fig. 5] Figure 5 includes schematic views illustrating a method for fixing a cylindrical filtration membrane to a circular cylindrical support member according to a second modification example of the first embodiment.
[Fig. 6] Figure 6 shows a fourth modification example of the first embodiment; and Fig. 6(A) is an enlarged cross-sectional view of a major portion of a separation membrane element for filtration, and Fig. 6(B) is a further enlarged view of Fig. 6(A).
[Fig. 7] Figure 7 is a schematic view showing a fifth modification example of the first embodiment.
[Fig. 8] Figure 8 shows a separation membrane element for filtration according to a sixth modification example of the first embodiment; and Fig. 8(A) is a schematic perspective view illustrating a structure of the separation membrane element for filtration, and Fig. 8(B) is a cross-sectional view of the separation membrane element for filtration.
[Fig. 9] Figure 9 is a schematic perspective view showing a structure of a separation membrane element for filtration according to a second embodiment.
[Fig. 10] Figure 10 is a schematic view showing a separation membrane element for filtration according to a third embodiment.
[Fig. 11] Figure 11 is a schematic perspective view showing a structure of a separation membrane element for filtration according to a fourth embodiment.
[Fig. 12] Figure 12 shows a separation membrane element for filtration according to a fifth embodiment; and Fig. 12(A) is a schematic perspective view of the separation membrane element for filtration, and Fig. 12(B) is a plan view of Fig. 12(A).
[Fig. 13] Figure 13 shows a separation membrane element for filtration according to a modification example of the fifth embodiment.
[Fig. 14] Figures 14(A) to 14(D) are schematic views illustrating a method of positioning and fixing an upper-end opening of a cylindrical filtration membrane of the separation membrane element for filtration shown in Fig. 13.
[Fig. 15] Figure 15 is a schematic view showing a membrane module for filtration including separation membrane elements for filtration of the first embodiment.
[Fig. 16] Figure 16 is a schematic view showing a filtration apparatus including the membrane module for filtration shown in Fig. 15.
[Fig. 17] Figure 17 is a graph showing the pure water flow rate after acid resistance/alkali resistance test for Example and Comparative Example.

### Reference Numerals

10, 20, 30, 40, 50 separation membrane element for filtration
11, 21 cylindrical filtration membrane
12 circular cylindrical support member
13 upper frame
14 treated-liquid takeout opening
15 expanded porous PTFE membrane
16 expanded porous PTFE sheet
17 lower frame
18 nonwoven fabric
70 membrane module for filtration
80 branch tube
81 common treated-liquid collecting tube
100 filtration apparatus

### Best Modes for Carrying Out the Invention

The embodiments of the present invention will be described below with reference to the drawings.

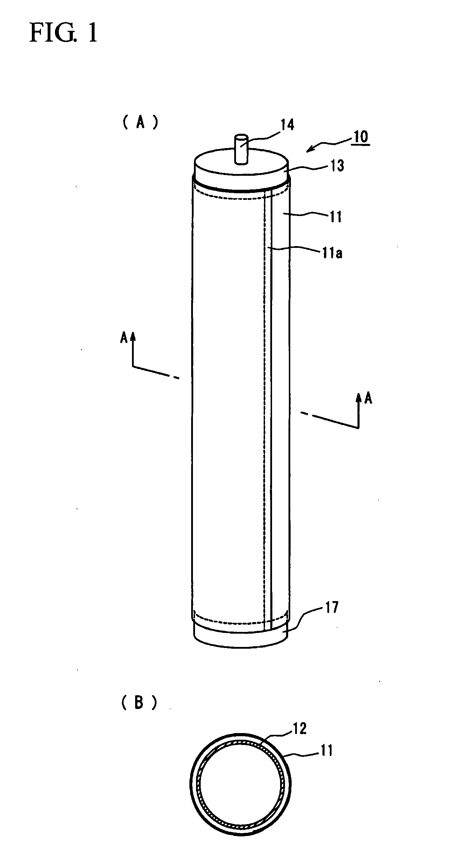

Figures 1 to 3 show a first embodiment of the present invention.
A separation membrane element for filtration 10 according to the first embodiment is configured to perform solid-liquid separation treatment by being immersed in a liquid to be treated which contains a highly turbid suspended component, and is used in a Membrane Bioreactor process by being immersed in an aeration tank containing sewage and activated sludge.

The separation membrane element for filtration 10 includes a cylindrical filtration membrane 11 composed of a porous sheet, a circular cylindrical support member 12 composed of a PFA resin for supporting a hollow of the cylindrical filtration membrane 11 while maintaining a space serving as the treated-liquid passage, a disc-shaped upper frame 13 composed of a PFA resin provided with a treated-liquid takeout opening 14 on the upper surface thereof, and a lower frame 17 not provided with a treated-liquid takeout opening.

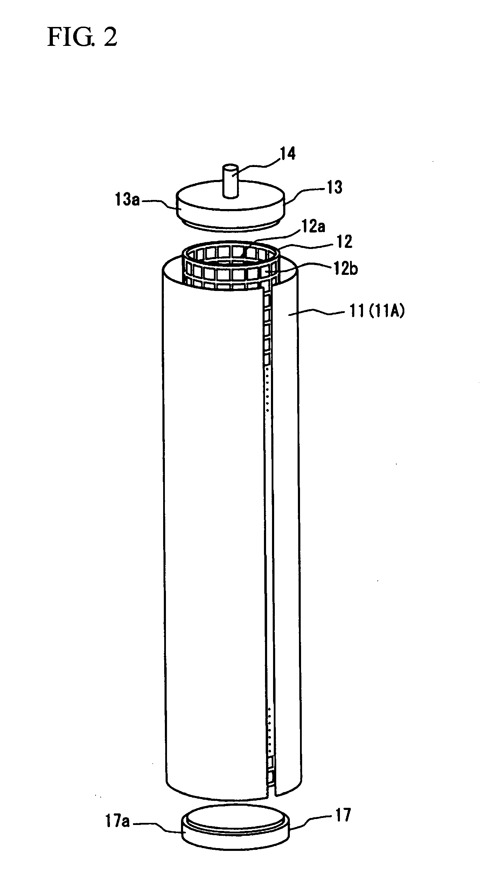

In the separation membrane element for filtration 10, as shown in Fig. 2, the hollow of the circular cylindrical support member 12 is fitted and thermally bonded to the protruding portions of the upper frame 13 and the lower frame 17 to form an integrated structure. Then, a porous sheet 11A for forming a filtration membrane is rolled around the circular cylindrical support member 12, and a roll start side and a roll finish side are thermally sealed together at a sealing portion 11a to form a cylindrical filtration membrane 11. Then, the upper-end opening in the axial direction of the cylindrical filtration membrane 11 is thermally bonded to an outer peripheral surface 13a of the upper frame 13, and the lower-end opening is thermally bonded to an outer peripheral surface 17a of the lower frame 17. In such a manner, one axial-direction end of the cylindrical filtration membrane 11 is sealed with a treated-liquid takeout opening 14 being left open, and the other end is sealed with the frame. Alternatively, a method may be used in which after the circular cylindrical support member 12 is covered with a cylindrical filtration membrane 11 which has been prepared in advance, the circular cylindrical support member is fitted to the protruding portions of the upper frame 13 and the lower frame 17, and the cylindrical filtration membrane 11 is thermally bonded to the outer peripheral surfaces 13a and 17a of the upper and lower frames to form an integrated structure.
The cylindrical filtration membrane 11 has a diameter of 3 to 50 mm and a length of 500 to 4,000 mm.

The thermal bonding between each of the outer peripheral surfaces 13a and 17a of the upper and lower frames and the cylindrical filtration membrane 11 is performed by heating from the cylindrical filtration membrane 11 side, which is composed of the expanded porous PTFE membrane, at a temperature equal to or higher than the melting point of the PFA resin constituting the upper and lower frames to partially melt the cylindrical filtration membrane 11 and the surfaces 13a and 17a of the upper and lower frames, followed by solidifying by cooling. In such a configuration, since the melted PFA resin having high fluidity enters between pores of the porous sheet 11A constituting the cylindrical filtration membrane 11, the fixing portions between the porous sheet and the frames can be strengthened, and the separation membrane element for filtration can be manufactured by a simple work at a reduced cost.
In this embodiment, the outer peripheral surface of the circular cylindrical support member 12 is left loose without being fixed to the cylindrical filtration membrane 11.

The circular cylindrical support member 12 is configured, as shown in Fig. 2, so as to include the hollow 12a in communication with the treated-liquid takeout opening 14 and to include many through-holes 12b on the outer peripheral surface. Thus, the treated liquid permeated through the cylindrical filtration membrane 11 smoothly flows into the hollow 12a which is the inside of the circular cylindrical support member 12 to reach the treated-liquid takeout opening 14.

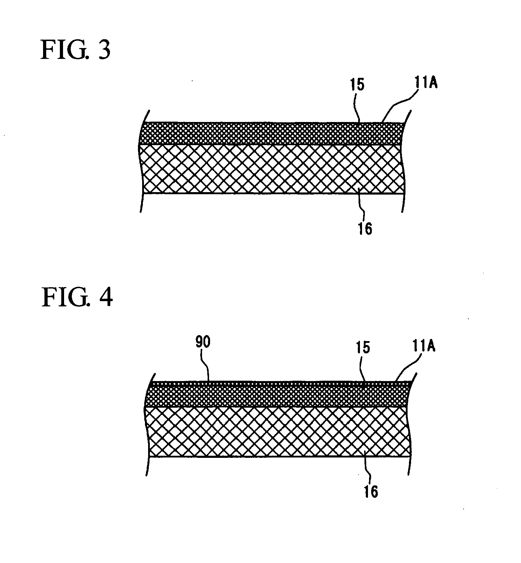

Figure 3 is an enlarged schematic view illustrating a structure of a porous sheet 11A constituting the cylindrical filtration membrane 11 of the separation membrane element for filtration 10 according to the first embodiment.
The porous sheet 11A is composed of a laminate including an expanded porous PTFE membrane 15 and an expanded porous PTFE sheet 16 having a larger pore diameter and a larger thickness than the expanded porous PTFE membrane 15.
The porous sheet 11A is formed by the same method as the method of forming the expanded porous PTFE membrane 15 in which PTFE unsintered powder and a liquid lubricant are subjected to paste extrusion, and the resulting shaped body is biaxially stretched, and by laminating the expanded porous PTFE sheet 16 having a larger pore diameter than the expanded porous PTFE membrane 15, followed by sintering to form an integrated structure.

In the expanded porous PTFE membrane 15 used, in a single membrane state, without being laminated to the expanded porous PTFE sheet 16, the mean pore diameter is 0.01 to 0.45 µm, the average thickness is 5 to 200 µm, the mean maximum length of the fibrous skeleton surrounding pores is 5 µm or less, and the particle collection efficiency for particles with a diameter of 0.45 µm is 90% or more.
On the other hand, in the expanded porous PTFE sheet 16 used, in a single sheet state, without being laminated to the expanded porous PTFE membrane 15, the mean pore diameter is 1 to 15 µm, the average thickness is 5 to 195 µm, and the mean maximum length of the fibrous skeleton surrounding pores is 15 to 100 µm.
Furthermore, in the porous sheet 11A composed of a laminate including the expanded porous PTFE membrane 15 and the expanded porous PTFE sheet 16, the strength in terms of tensile strength is 10 N/mm² or more. The porous sheet 11A has excellent chemical resistance such that, even after being immersed in each of 3% by mass sulfuric acid, a 4% by mass aqueous solution of sodium hydroxide, and an aqueous solution of sodium hypochlorite having an effective chlorine concentration of 10%, at a temperature of 50°C for 10 days, the amount of permeated water is not decreased, and the membrane is not damaged.

In the cylindrical filtration membrane 11, the expanded porous PTFE membrane 15 having smaller pores is disposed on the outer peripheral surface side which is the liquid to be treated side.
In such a manner, by disposing the dense expanded porous PTFE membrane 15 having a smaller mean pore diameter on the liquid to be treated side, solid particles separated can be prevented from being irreversibly captured in the pores of the expanded porous PTFE membrane 15 in a stationary state after the initial stage of solid-liquid separation treatment.
Furthermore, the surfaces of the fibers and resin portions constituting the porous sheet 11A composed of the laminate including the expanded porous PTFE membrane 15 and the expanded porous PTFE sheet 16 are subjected to hydrophilization treatment using crosslinked PVA. The hydrophilization treatment facilitates contact with the water to be treated.

In the separation membrane element for filtration having the configuration described above, since expanded porous PTFE membranes having different pore sizes are laminated to form a porous sheet serving as the cylindrical filtration membrane, the element provides not only excellent filtration performance, but also excellent chemical resistance and strength, and can be cleaned with a high-concentration oxidizer or alkali chemical. Therefore, a large amount of permeated water can be obtained over a long period of time.
In this embodiment, the example in which the cross-sectional shapes of the support member and the frames are circular has been described. However, the cross-sectional shapes may be elliptical or oval.

Next, a first modification example of the first embodiment will be described.
In the first modification example, the structure of the porous sheet 11A constituting the cylindrical filtration membrane 11 is different from that of the first embodiment.
In this modification example, as shown in Fig. 4, a dense layer 90 serving as a dense filtration layer is provided on the expanded porous PTFE membrane 15 side of the porous sheet 11A of the first embodiment, and the dense layer 90 side is disposed on the outer peripheral surface side which is the liquid to be treated side.
In the dense layer 90, a solution in which fine particles composed of 90% of PTFE and 10% of PFA which has the same chemical resistance and heat resistance as those of PTFE are dispersed is applied by coating onto the expanded porous PTFE membrane 15, followed by sintering and stretching to provide fine pores. The dense layer 90 has a mean pore diameter of 0.01 to 0.05 µm, an average thickness of 0.5 to 10 µm, and a smaller pore diameter than that of the expanded porous PTFE membrane 15. Therefore, 90% or more of fine particles with a particle diameter of 0.05 µm or more can be removed, and thus high filtration performance can be exhibited. Furthermore, since the dense layer 90 side is arranged to correspond to the liquid to be treated side, solid particles separated can be prevented from being irreversibly captured in the pores of the porous sheet 11A in a stationary state after the initial stage of solid-liquid separation treatment. Therefore, blocking can be further prevented than in the porous sheet of the first embodiment.

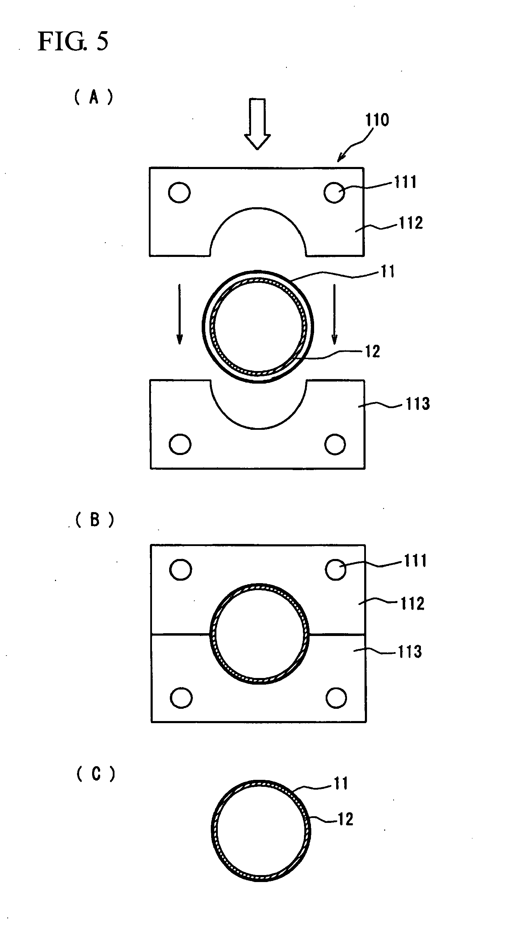

Next, a second modification example of the first embodiment will be described.
The second modification example differs from the first embodiment only in that the outer peripheral surface of the circular cylindrical support member 12 is bonded to the inner peripheral surface of the cylindrical filtration membrane 11.
The bonding between the inner peripheral surface of the cylindrical filtration membrane 11 and the outer peripheral surface of the circular cylindrical support member 12 is performed using a thermal bonding device 110 shown in Fig. 5 by the method described below.
The thermal bonding device 110 includes a pair of heat dies 112 and 113, each having a recess having a semicircular cross-section suitable for the size of the circular cylindrical support member 12. Heaters 111 are embedded in the heat dies 112 and 113.
The circular cylindrical support member 12 is covered with the cylindrical filtration membrane 11 in advance, and then sandwiched between the recesses of the heat dies 112 and 113, followed by heating under pressure as shown in Figs. 5(A) and 5(B) and releasing from the dies. Thereby, as shown in Fig. 5(C), the inner peripheral surface of the cylindrical filtration membrane 11 and the outer peripheral surface of the circular cylindrical support member 12 are integrated by thermal bonding.
When this bonding method is used, since the PFA resin constituting the circular cylindrical support member 12 has higher fluidity during melting than the PTFE resin constituting the porous sheet 11A of the cylindrical filtration membrane 11, the PFA resin partially enters the pores of the PTFE porous sheet 16 having a larger pore diameter in the porous sheet 11A. However, since the PFA resin does not reach the expanded porous PTFE membrane 15 having a smaller pore diameter, the filtration performance is not decreased, and the cylindrical filtration membrane 11 and the circular cylindrical support member 12 can be integrated.
In addition, during heating under pressure in the heat dies 112 and 113, in order to prevent deformation of the circular cylindrical support member 12, a core (not shown) may be inserted, for support, into the inside of the circular cylindrical support member 12.

Next, a third modification example of the first embodiment will be described.
The third modification example differs from the first embodiment in that the circular cylindrical support member 12 and the upper and lower frames 13 and 17 are composed of a polyethylene resin.
After the circular cylindrical support member 12 is covered with a cylindrical filtration membrane 11 which has been prepared in advance, the circular cylindrical support member is fitted to the protruding portions of the upper frame 13 and the lower frame 17, and the cylindrical filtration membrane 11 is thermally bonded to the outer peripheral surfaces 13a and 17a of the upper and lower frames to form an integrated structure. The thermal bonding between each of the outer peripheral surfaces 13a and 17a of the upper and lower frames and the cylindrical filtration membrane 11 is performed by heating from the cylindrical filtration membrane 11 side, which is composed of the expanded porous PTFE membrane having high melting point, at a temperature equal to or higher than the melting point of the polyethylene resin constituting the upper and lower frames to partially melt the surfaces of the upper and lower frames 13, followed by solidifying by cooling. In such a configuration, it is possible to manufacture the separation membrane element for filtration in which the fixing portions between the porous sheet and the frames are strengthened by a simple work at a reduced cost.

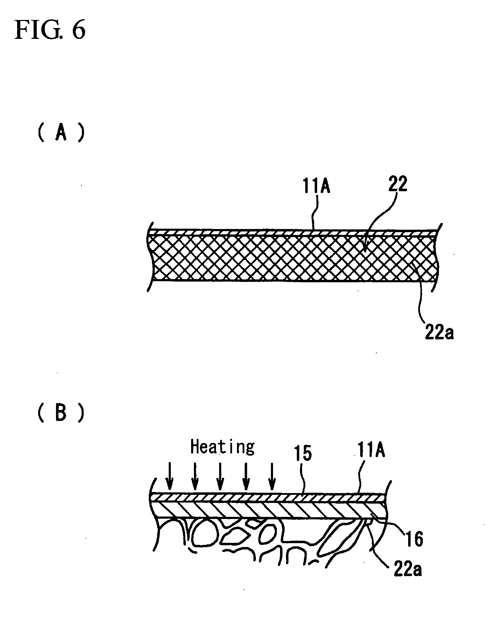

Figure 6 shows an enlarged cross-sectional view of a major portion of a separation membrane element for filtration according to a fourth modification example of the first embodiment.
The fourth modification example differs from the first embodiment in that the circular cylindrical support member 12 of the first embodiment is composed of a PFA net having a circular cylindrical shape and that the upper and lower frames 13 and 17 are composed of stainless steel coated with a PFA resin.
Furthermore, the cylindrical filtration membrane 11 (11A) and the net 22 are thermally fixed to each other by heating at a temperature of 300°C to 500°C from the cylindrical filtration membrane 11 side, which is composed of an expanded porous PTFE membrane and has high melting point, to partially melt the surface of the net 22 by means of heat transmitted through the cylindrical filtration membrane 11, followed by solidifying by cooling. PFA fibers 22a constituting the net 22 are melted and partially enter fine pores of the expanded porous PTFE membrane 16 and cooled. Therefore, the cylindrical filtration membrane 11 and the net 22 can be securely bonded together. However, the melted fibers 22a of the net 22 partially enter the pores of the PTFE porous sheet 16 having a larger pore diameter of the porous sheet, but do not reach the expanded porous PTFE membrane 15 having a smaller pore diameter. Therefore, the net 22 and the cylindrical filtration membrane 11 can be integrated without decreasing the filtration performance. In such a configuration, it is also possible to stably support the cylindrical filtration membrane 11 while the treated-liquid passage is being maintained by the net 22 together with the upper and lower frames 13 and 17.
In addition, in this modification example, the cylindrical filtration membrane 11 and the outer peripheral surfaces 13a and 17a of the upper and lower frames 13 and 17 are thermally bonded to each other. Since each of the materials has high melting point, the heat-sealing temperature is also set at a temperature higher than the melting point of the material.

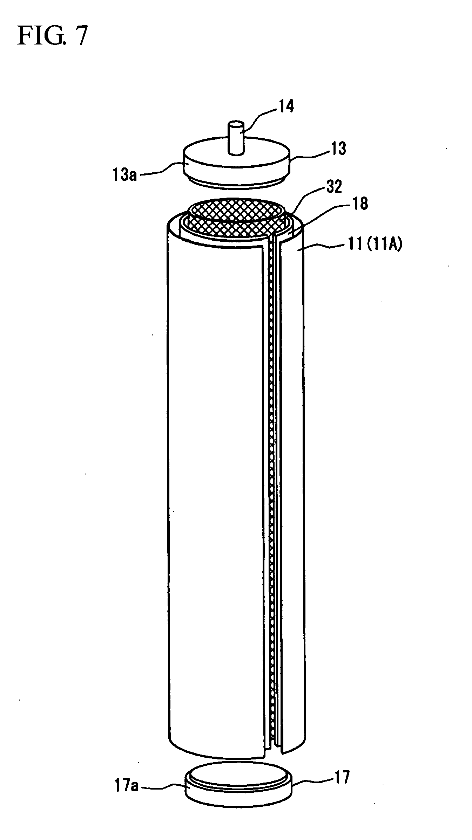

Figure 7 shows a fifth modification example of the first embodiment.
In the fifth modification example, a polyethylene-coated metal mesh 32 having a circular cylindrical shape and stiffness is used instead of the circular cylindrical support member 12 composed of PFA in the first embodiment. The polyethylene-coated metal mesh 32 is formed by immersing a stainless steel mesh which is subjected to surface treatment in advance in a melted polyethylene resin.
Both end-openings in the axial direction of the polyethylene-coated metal mesh 32 are fitted and thermally bonded to the protruding portions of the upper and lower frames 13 and 17 to form an integrated structure as in the circular cylindrical support member 12 shown in Fig. 2.
Furthermore, in this modification example, a nonwoven fabric 18 is interposed between the cylindrical filtration membrane 11 and the polyethylene-coated metal mesh 32. The roll start side and the roll finish side of the nonwoven fabric 18 are bonded together by heat-sealing or the like, but may not be bonded together.
The both axial-direction end openings of the cylindrical filtration membrane 11 are heat-sealed to the outer peripheral surfaces 13a and 17a of the upper and lower frames 13 and 17.
In such a configuration, it is also possible to maintain the treated-liquid passage while the cylindrical filtration membrane 11 is being stably supported by the polyethylene-coated metal mesh 32 and the nonwoven fabric 18. Since the nonwoven fabric 18 serves as a cushioning material between the cylindrical filtration membrane 11 and the polyethylene-coated metal mesh 32, the cylindrical filtration membrane 11 can be softly supported.
In this modification example, the nonwoven fabric is not bonded to the cylindrical filtration membrane 11 and the polyethylene-coated metal mesh 32. However, the nonwoven fabric may be bonded to either one or both of them.

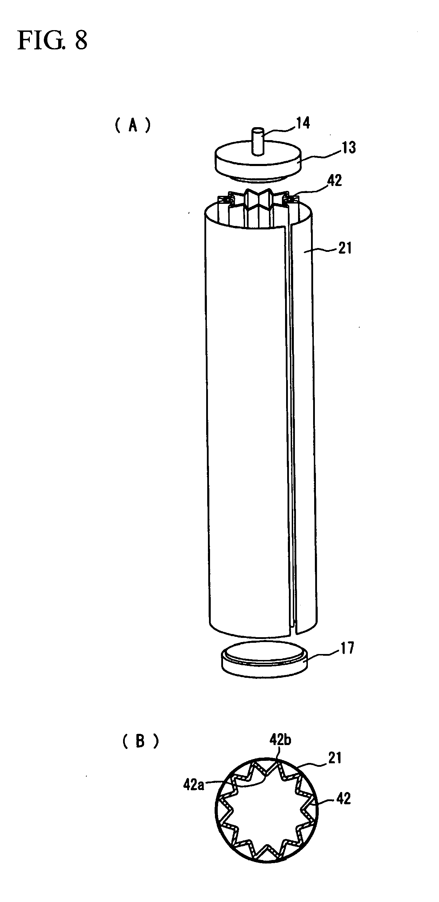

Figure 8 shows a sixth modification example of the first embodiment.
In this modification example, a pleated support member 42 composed of polypropylene is used as the support member.
The pleated support member 42 is formed by bending a rigid pleated plate having continuing v-shaped bent portions and thermally bonding a roll start side and a roll finish side of the pleated plate. At both axial-direction ends of the pleated support member 42, valleys 42a of the peats are fitted to the protruding portions of the upper and lower frames 13 and 17, and thermal bonding is performed.
Furthermore, as the porous sheet constituting the cylindrical filtration membrane, a porous sheet in which a nonwoven fabric (not shown) composed of polypropylene with a small thickness of 0.05 to 5 mm is further laminated to the expanded PTFE sheet 16 side having a large pore diameter in the porous sheet 11A is used. The nonwoven fabric layer of the cylindrical filtration membrane 21 composed of the porous sheet and the peaks 42b of the pleats of the pleated support member 42 are thermally bonded together. Both end openings of the cylindrical filtration membrane 21 are thermally bonded to the outer peripheral surfaces 13a and 17a of the upper and lower frames 13 and 17, and the outer peripheries are sealed.
In such a configuration, a space between the cylindrical filtration membrane 21 and the pleated support member 42 forms a plurality of outlets in communication with the treated-liquid takeout opening, and a passage to the treated-liquid takeout opening 14 can be secured.

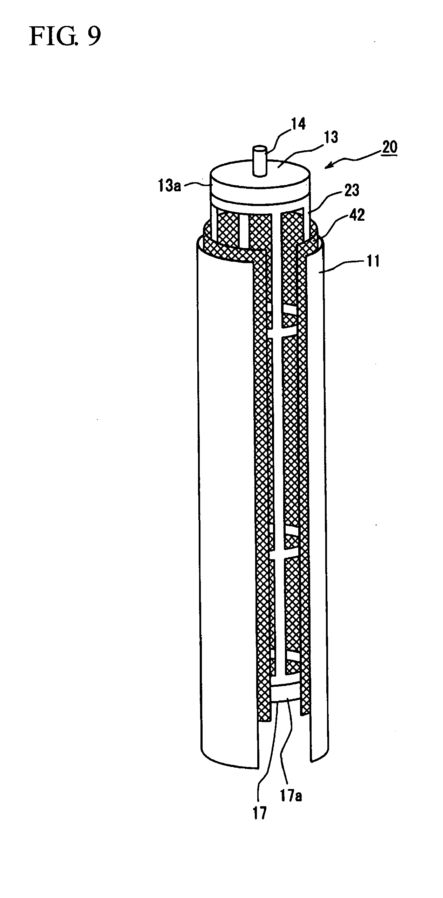

Figure 9 shows a separation membrane element for filtration 20 according to a second embodiment.
The separation membrane element for filtration 20 differs from the separation membrane element for filtration 10 of the first embodiment in that the upper frame 13 and the lower frame 17 are connected to each other by an interconnecting frame 23 having a length corresponding to the length in the axial direction of the cylindrical filtration membrane 11, and that the cylindrical support member is composed of a thin stainless steel mesh 42.
The interconnecting frame 23 is composed of stainless steel. By fitting both axial-direction end openings of the interconnecting frame 23 to the outer peripheral surface 13a and 17a of the upper and lower frames 13 and 17, the frames 13 and 17 and the interconnecting frame 23 are connected and fixed to each other.
In such a configuration, since the upper frame and the lower frame can be held by the highly rigid interconnecting frame, a separation membrane element for filtration having higher strength can be obtained.
Furthermore, since the circular cylindrical support member can be held by the interconnecting frame, it is possible to use a circular cylindrical support member having low rigidity.
The other configurations and operational advantages are the same as those of the first embodiment, and the description thereof will be omitted, the same reference numerals being used.

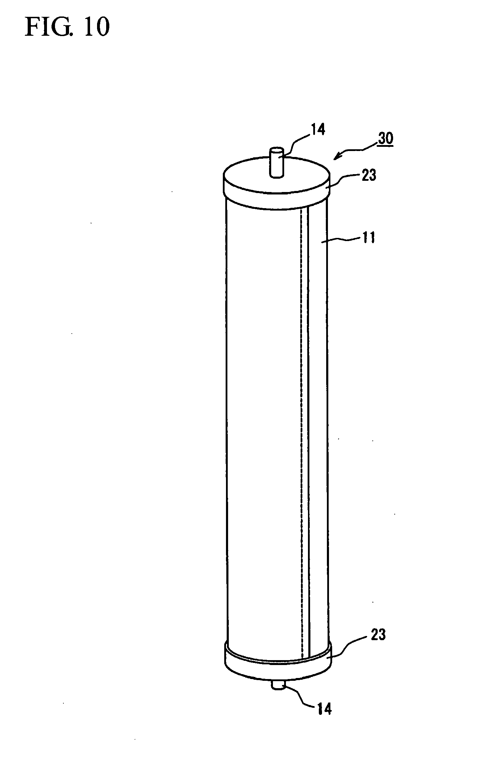

Figure 10 shows a separation membrane element for filtration 30 according to a third embodiment.
In the separation membrane element for filtration 30 of the third embodiment, the structure of the upper and lower frames 13 and 17 is different from that in the first embodiment.
That is, in the third embodiment, as the upper and lower frames, the same frames 23 each provided with a treated-liquid takeout opening 14 are used. Both axial-direction end openings of the cylindrical filtration membrane 11 are embedded in the frames 23, and sealing is performed so as to leave the treated-liquid takeout openings open. The frames 23 are fixed by heat-sealing or an adhesive. When the frames 23 are composed of a polyolefin resin or a heat-fusible fluorocarbon resin, heat-sealing is performed. When the frames 23 are composed of an ABS resin or the like, sealing is performed using an adhesive, such as a urethane resin or an epoxy resin.
The other configurations and operational advantages are the same as those of the first embodiment, and the description thereof will be omitted, the same reference numerals being used.

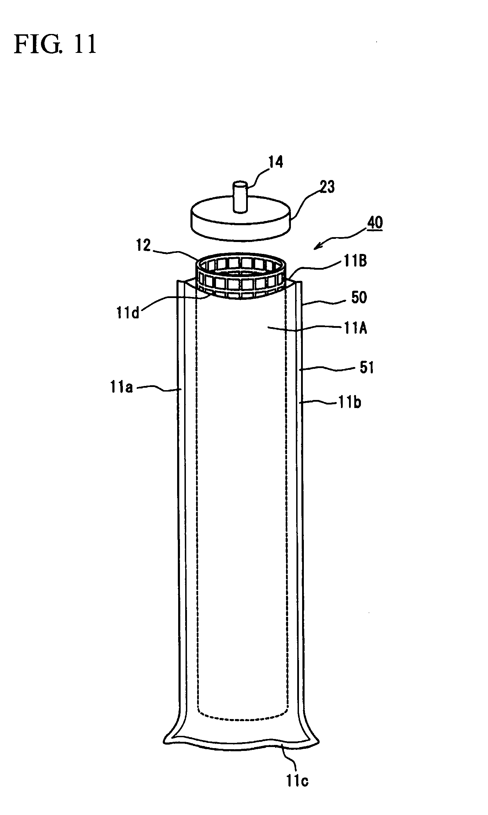

Figure 11 shows a separation membrane element for filtration 40 according to a fourth embodiment.
In the fourth embodiment, as shown in Fig. 11, two rectangular porous sheets 11 A and 11B are disposed so as to face each other. Both left and right side edges 11a and 11b and bottom edges 11c of the porous sheets are sealed by heat-sealing to form a bag-like filtration membrane 50. Next, a circular cylindrical support member 12 similar to that of the first embodiment is covered with the bag-like filtration membrane 50, and the bag-like filtration membrane 50 is maintained in a circular cylindrical shape. An outer peripheral sealing portion 51 is not fixed to the outer periphery of the circular cylindrical support member 12.
An upper end opening 11d which is not heat-sealed is, together with the sealing portion 51, embedded in a frame 23 provided with a treated-liquid takeout opening 14, and sealing is performed. As the sealing method, heat-sealing is preferable when the frame 23 is composed of a polyolefin resin or a heat-fusible fluorocarbon resin, and adhesion using a urethane resin, an epoxy resin or the like is preferable when the frame 23 is composed of an ABS resin or the like.
As in this embodiment, even in a configuration in which a planar bag-like filtration membrane 50 is supported by a circular cylindrical support member, a treated-liquid passage can be secured in the hollow.
The other configurations and operational advantages are the same as those of the first embodiment, and the description thereof will be omitted, the same reference numerals being used.

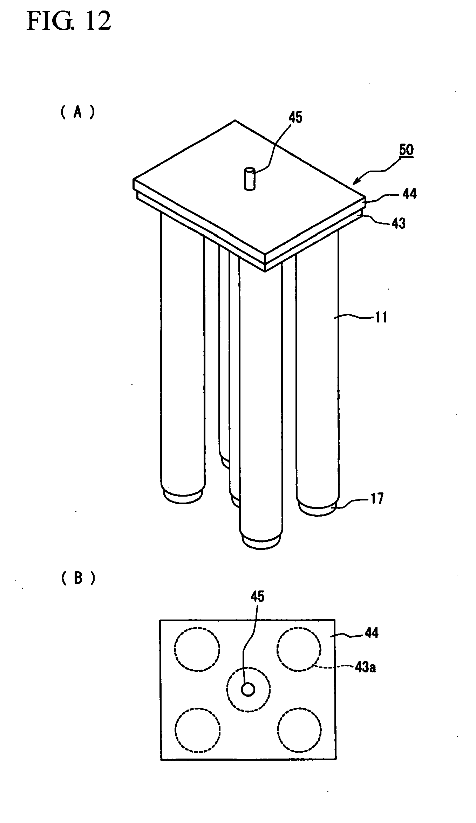

Figure 12 shows a separation membrane element for filtration 50 according to a fifth embodiment.
In the separation membrane element for filtration 50 of the fifth embodiment, instead of the upper frame 13 of the first embodiment, a fixing member 43 is formed in which upper-end openings in the axial direction of five cylindrical filtration membranes 11 are molded with a resin, and positioning and fixing are performed.
The fixing member 43 is fabricated by a method in which, as shown in Fig. 12(B) recesses 43a corresponding to the shape of the upper-end openings of the cylindrical filtration membranes 11 are formed in a heat-fusible plastic member composed of a polypropylene resin, a polyethylene resin, or the like, the upper-end openings of the cylindrical filtration membranes 11, each provided with a circular cylindrical support member 12 are placed inside the recesses 43a, and then thermal fusion is performed in such a state. While being held by the fixing member 43, the upper-end openings of the cylindrical filtration membranes 11 are in communication with an inside of a collecting header 44, and the collecting header 44 is in communication with a collecting tube 45.
In such a configuration, since one fixing member can seal the openings of a plurality of separation membrane elements for filtration, a membrane module for filtration can be easily manufactured. The membrane module for filtration may be an immersion-type module, or may be used as a module for external pressure filtration by being arranged in a pressurized vessel.
In addition, when an immersion-type module is fabricated, in order to prevent bubbles which rise from below from spreading, a cover may be provided so as to surround the outer periphery of the fixing member 43 and to extend in the axial direction of the cylindrical filtration membrane 11 to the lower frame 17. The cover may be further extended from the lower frame 17 downward to an appropriate range with a maximum of 500 mm. However, when such a cover is used, preferably, an appropriate space (window) is provided in the cover so that bubbles rising inside the separation membrane element or the liquid to be treated can horizontally move from the vicinity of the bottom of the collecting header of the separation membrane element and promptly flow to the outside of the element.

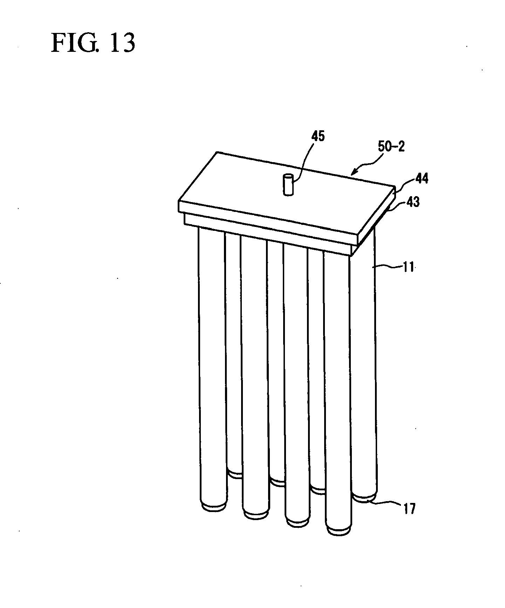

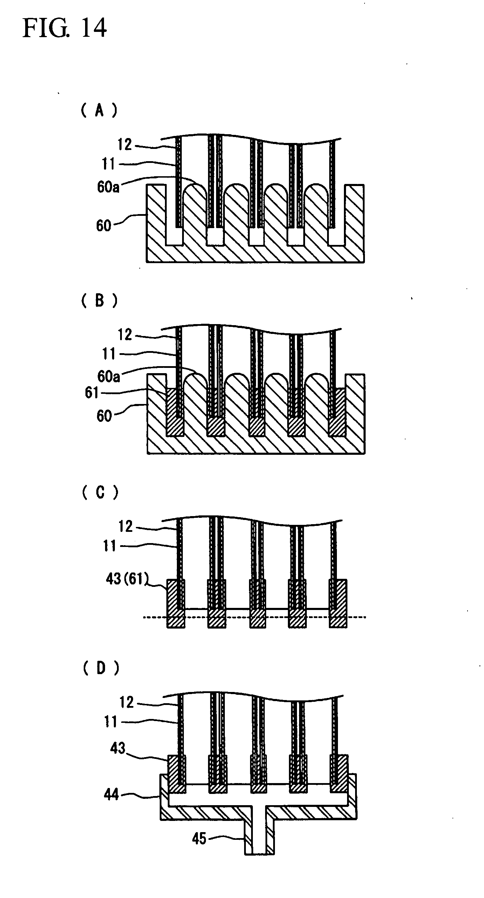

Figures 13 and 14 show a modification example of the fifth embodiment.
A membrane element for filtration 50-2 of this modification example differs from the fifth embodiment in that eight cylindrical filtration membranes 11, each provided with a circular cylindrical support member 12 inside, are arranged, and differs with respect to the method of positioning and fixing the upper-end openings.
The method of positioning and fixing the upper-end openings of the cylindrical filtration membranes 11 in this modification example will be described with reference to Fig. 14.
First, a mold 60 having a plurality of projecting portions 60a on the bottom is prepared, and as shown in Fig. 14(A), openings corresponding to the upper-end openings of the cylindrical filtration membranes 11, each provided with a circular cylindrical support member 12, are fitted to the projecting portions 60a. Next, as shown in Fig. 14(B), a resin 61, such as an epoxy resin or a polyurethane resin, is cast into the mold 60 and cured. Then, as shown in Fig. 14(C), the cylindrical filtration membranes 11 integrated with the cured resin 61 are released from the mold 60. The resin 61 does not flow in the projecting portions 60a of the mold 60, and treated-liquid passages are secured inside the cylindrical filtration membranes 11.
The lower end portions are cut along the broken line shown in the drawing to form a fixing member 43, and then the fixing member 43 and a collecting header 44 are bonded together. Thereby, a membrane element 50-2 is fabricated.
By using such a fixing method, a fixing member which seals the openings of a plurality of separation membrane elements for filtration can be very easily manufactured.

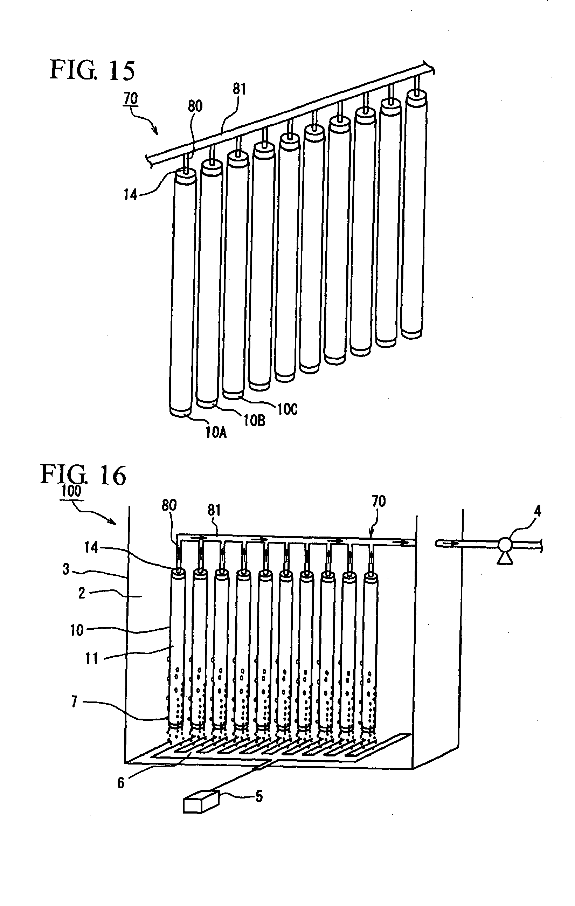

Figure 15 shows a membrane module for filtration 70 including a plurality of separation membrane elements for filtration 10 of the first embodiment.
The membrane module for filtration 70 is used for immersion-type pressure suction filtration, in which the separation membrane elements for filtration 10 of the first embodiment are arranged in parallel, a common treated-liquid collecting tube 81 is disposed above the separation membrane elements, and the treated-liquid takeout opening 14 provided on the upper surface of each of the separation membrane elements for filtration 10 arranged in parallel is connected to an end of its corresponding branch tube 80 branched from the common treated-liquid collecting tube 81 so that the separation membrane elements for filtration 10 are suspended and supported.
In such a manner, the membrane module for filtration 70 has a configuration in which the treated-liquid takeout openings 14 of the separation membrane elements for filtration 10 are individually fixed to the branch tubes 80, replacement can be easily performed for each membrane element.

Next, with reference to Fig. 16, the operation of a filtration apparatus 100 including the membrane module for filtration 70 will be described.
A liquid to be treated 2 which is an effluent containing activated sludge including treated sewage and introduced and filled in an immersion tank 3 and which contains 5,000 to 30,000 mg/L of MLSS (mixed liquor suspended solids) is permeated through the cylindrical filtration membranes 11 of the separation membrane elements for filtration 10 by driving a suction pump 4 and subjected to solid-liquid separation, led to the common treated-liquid takeout tube 81 through the branch tubes 80 connected to the treated-liquid takeout openings 14, and then recovered as a treated liquid.

In order to separate and remove the suspended components deposited on the surfaces of the separation membrane elements for filtration 10, air bubbling is applied to the surfaces of the cylindrical filtration membranes 11 of the membrane element 10.
More specifically, a blower 5 is operated to introduce pressurized air into a cleaning pipe 6, and the pressurized air is ejected through gas ejection holes (not shown) of the cleaning pipe 6 to generate bubbles 7. The bubbles 7 are raised in the axial direction while being brought into contact with the outer surfaces of the cylindrical filtration membranes 11 of the separation membrane elements for filtration 10 to strongly separate and remove the suspended components deposited on the surfaces of the separation membrane elements for filtration 10. Thus, membrane filtration can be continued stably.
Air bubbling may be constantly performed or periodically performed.
In the separation membrane elements for filtration 10 of this embodiment, one treated-liquid takeout opening 14 is provided on each separation membrane element 10, the treated liquid is entirely sucked into an upper portion. However, as in the separation membrane element for filtration 30 of the third embodiment, two or more treated-liquid takeout openings 14 may be provided.
As described above, the separation membrane element for filtration of the present invention includes a cylindrical filtration membrane having a larger diameter than the hollow-fiber membrane which is usually used. Therefore, pressure loss due to the movement of the treated liquid inside the cylindrical filtration membrane can be reduced, and bubbles can be reliably applied to the surfaces of the membranes. Furthermore, since an expanded porous PTFE membrane is included, mechanical strength is excellent, and suspended components can be strongly separated and removed.

The example of the present invention will be described in detail below.

### (EXAMPLE)

A separation membrane element for filtration including a cylindrical filtration membrane was fabricated as in the first embodiment except that a single-layer expanded porous PTFE membrane having an average thickness of 7 µm and a mean pore diameter of 0.1 µm was used as a porous sheet.

### (COMPARATIVE EXAMPLE)

The same procedure was used as in Example 1 except that a PVDF membrane laminated on a polyester nonwoven fabric was used as a porous sheet. The PVDF membrane portion had an average thickness of 5 µm and a pore diameter of 0.1 µm.
In Example and Comparative Example, the average thickness and the mean pore diameter were measured by the same methods as those described above.

The separation membrane elements of Example and Comparative Example were immersed in each of acid, alkali, and oxidizer aqueous solutions under the conditions shown in Table to evaluate acid resistance, alkali resistance, and oxidizer resistance.
The acid resistance, alkali resistance, and oxidizer resistance were evaluated by appearance observation described below, and the pure water flow rate described below was measured for the acid resistance and alkali resistance.

### (Appearance observation)

Each of the separation membrane elements after immersion in each of the aqueous solutions was washed with water, and the porous sheet was cut from the cylindrical filtration membrane of the separation membrane element. Then, the acid resistance and alkali resistance were observed visually, and the oxidizer resistance was observed with a scanning electron microscope (SEM: 1000 x) to evaluate the chemical resistance of the porous sheet. The chemical resistance was evaluated as "○" when no change was observed in the porous sheet, and evaluated as "x" when breakage, cracking, or the like was observed, and damage to the porous sheet was observed. The results are shown in Table.

**[Table]**

| | | Example | Comparative example |
|---|---|---|---|
| Acid resistance **(H₂SO₄) 50°C, 10** days | **pH1** | ○ | ○ |
| | **pH4** | ○ | ○ |
| Alkali resistance **(NaOH) 50°C 10** days | **pH11** | ○ | ○ |
| | **pH14** (**4%**by mass) | ○ | × (Discolored to red and broken) |
| Oxidizer resistance **50°C, 10** days | **0.5%** | ○ | ○ |
| | **2%** | ○ | ○ |
| | **5%** | ○ | × (Cracked) |
| | **10%** | ○ | × (Cracked) |

### (Pure water flow rate)

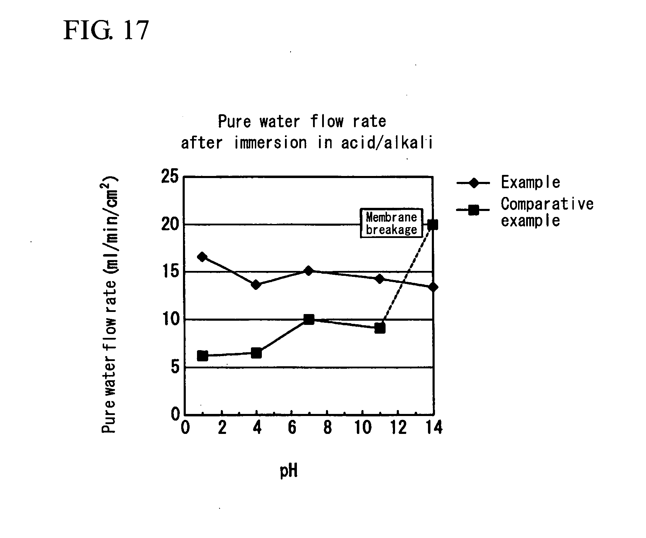

After immersion in each of the acid and alkali aqueous solutions, each of the separation membrane elements was washed with water, and the porous sheet was cut out. The pure water flow rate was measured for each porous sheet. The measurement of the pure water flow rate was performed at a measurement pressure (suction pressure) of 95 kPa using a circular punched-out product of a sample size of ϕ47 mm. The results are shown in Fig. 17.

As shown in Table, in the separation membrane element of Comparative Example provided with the porous sheet composed of the PVDF resin, at pH14, discoloration to red occurred and the porous sheet was broken, indicating lack of alkali resistance. In immersion in an aqueous solution of sodium hypochlorite having an effective chlorine concentration of 5% or more, the porous sheet was cracked, indicating lack of oxidizer resistance. Furthermore, as shown in Fig. 17, in the porous sheet after alkali treatment at pH14, pinholes occurred, and the pure water flow rate rapidly increased and became unmeasurable.
In contrast, in the separation membrane element of Example including the expanded porous PTFE membrane as the porous sheet, no damage was observed in appearance in the evaluation of any of acid resistance, alkali resistance, and oxidizer resistance. The pure water flow rate neither significantly decreased or increased after the immersion in acid/alkali aqueous solutions, maintaining the filtration performance.
As described above, the separation membrane element for filtration of the present invention provided with the expanded porous PTFE membrane has excellent chemical resistance and can maintain the filtration performance after chemical treatment compared with the conventional membrane element.

The present invention is not limited to the embodiments and examples described above, but includes modifications within a scope equivalent to the scope of the claims. The cylindrical filtration membrane is not limited to a circular cylindrical shape, and may have a prismatic shape, such as a triangular prismatic or quadrangular prismatic shape.

## Claims

1. A separation membrane element for filtration configured to perform solid-liquid separation treatment by being immersed in a liquid to be treated which contains a suspended component, the separation membrane element comprising:
a cylindrical filtration membrane obtained by forming a porous sheet including at least an expanded porous PTFE (polytetrafluoroethylene) membrane into a cylindrical shape and in which a hollow surrounded by the porous sheet serves as a treated-liquid passage;
a support member for maintaining the hollow serving as the treated-liquid passage; and
sealing parts which seal both axial-direction ends of the cylindrical filtration membrane so as to leave at least one treated-liquid takeout opening open.

2. The separation membrane element for filtration according to Claim 1, wherein the cylindrical filtration membrane has a circular cylindrical shape with a diameter of 3 to 50 mm.

3. The separation membrane element for filtration according to Claim 1 or 2, wherein the porous sheet constituting the cylindrical filtration membrane is formed into a cylindrical shape by rolling a sheet and bonding both edges of the sheet, or bonding edges of a plurality of sheets to each other.

4. The separation membrane element for filtration according to any one of Claims 1 to 3, wherein the expanded porous PTFE membrane constituting the porous sheet has a mean pore diameter of 0.01 to 5.0 µm, a mean maximum length of 30 µm or less in a fibrous skeleton which surrounds pores, and an average thickness of 5 to 200 µm.

5. The separation membrane element for filtration according to any one of Claims 1 to 4, wherein the porous sheet is composed of a single layer including the expanded porous PTFE membrane only or a plurality of layers including the expanded porous PTFE membrane and a dense layer provided on the outer surface of the expanded porous PTFE membrane, the dense layer being composed of at least one fluorocarbon resin selected from the group consisting of PTFE, PFA, and FEP and having pores that are finer than those of the layer of the expanded porous PTFE membrane.

6. The separation membrane element for filtration according to any one of Claims 1 to 5, wherein the support member is composed of a metal material coated with a polyolefin resin or a fluorocarbon resin, a polyolefin resin, a polyester resin, or a fluorocarbon resin, and the support member is in the shape of a mesh, a fiber assembly, a perforated sheet, or a pleated member having continuing v-shaped bent portions.

7. The separation membrane element for filtration according to any one of Claims 1 to 6, wherein the support member is bonded to a part of the internal surface or the entire internal surface of the cylindrical filtration membrane.

8. The separation membrane element for filtration according to any one of Claims 1 to 7, wherein the support member is formed so as to have cylindrical or prismatic shape maintaining capability, and the support member is covered with the cylindrical filtration membrane.

9. The separation membrane element for filtration according to any one of Claims 1 to 8, wherein the support member is composed of a worked plate provided with a plurality of outlets in communication with the treated-liquid takeout opening, the support member is arranged at least on the treated-liquid takeout opening side end of the cylindrical filtration membrane, and the outer peripheral surface thereof is fixed to the inner peripheral surface of the cylindrical filtration membrane.

10. The separation membrane element for filtration according to any one of Claims 1 to 9, wherein the sealing parts are formed by closing both axial-direction ends of the cylindrical filtration membrane by sealing using heating under pressure or a laser, and the treated-liquid takeout opening is formed without being closed by sealing.

11. The separation membrane element for filtration according to any one of Claims 1 to 9, wherein the sealing parts are constituted by a pair of frames disposed at both axial-direction ends of the cylindrical filtration membrane, and the frames are fixed to both ends of the cylindrical filtration membrane.

12. The separation membrane element for filtration according to Claim 11, wherein the frames are disc-shaped, and the pair of disc-shaped frames are connected to each other by an interconnecting frame having a length corresponding to the length in the axial direction of the cylindrical filtration membrane.

13. The separation membrane element for filtration according to Claim 11 or 12, wherein the frames are composed of a resin material including a polyolefin resin or a fluorocarbon resin or composed of a metal material coated with the polyolefin resin or the fluorocarbon resin.

14. A membrane module for filtration used for external pressure filtration or immersion-type pressure suction filtration, the membrane module comprising a plurality of separation membrane elements for filtration according to any one of Claims 1 to 13, wherein the separation membrane elements for filtration are connected to each other with a space therebetween.

15. The membrane module for filtration according to Claim 14, wherein the separation membrane elements for filtration are arranged in parallel, a common treated-liquid collecting tube is disposed above the separation membrane elements, and the treated-liquid takeout opening provided on the upper surface of each of the separation membrane elements for filtration arranged in parallel is connected to an end of its corresponding branch tube branched from the common treated-liquid collecting tube so that the separation membrane elements for filtration are suspended and supported.

16. The membrane module for filtration according to Claim 14 or 15, wherein the membrane module for filtration is immersed in a retention tank for a liquid to be treated which includes effluent containing activated sludge.

17. The membrane module for filtration according to Claim 16, wherein the liquid to be treated contains 5,000 to 30,000 mg/L of MLSS (mixed liquor suspended solids).
